# EUROPÄISCHE PATENTSCHRIFT

(11) **EP 2 073 007 B1**
(45) Veröffentlichungstag und Bekanntmachung des Hinweises auf die Patenterteilung: **21.12.2011**
(21) Anmeldenummer: 09004148.4
(22) Anmeldetag: 28.10.2003
(51) Int. Cl.: G01N 33/53, G01N 21/64

(54) **Vorrichtung zur Detektion eines in einer Probe enthaltenen Liganden**
Device for detecting a ligand in a sample
Dispositif pour la détection d'un ligand dans un échantillon

(30) Priorität: 29.10.2002 DE 10250495
(43) Veröffentlichungstag der Anmeldung: 24.06.2009
(62) Teilanmeldung aus: 03773672.5
(73) Patentinhaber: Endress+Hauser Conducta Gesellschaft für Mess- und Regeltechnik mbH & Co. KG, 70839 Gerlingen (DE)
(72) Erfinder: Lehmann, Mirko, Dr., 9642 Ebnat-Kappel (CH); Klapproth, Holger, Dr., 79108 Freiburg (DE); Sieben, Ulrich, Dr., 79279 Vörstetten (DE)
(74) Vertreter: Koslowski, Christine Adelheid

(56) Entgegenhaltungen:
- EP-A- 1 226 871
- WO-A-99/27140
- US-A- 5 922 550
- US-A- 6 060 256
- US-A1- 2002 147 330
- US-B1- 6 399 295

## Beschreibung

Die Erfindung betrifft eine Vorrichtung nach dem Oberbegriff von Anspruch 1.

Eine derartige Vorrichtung ist aus US 2002/0147330 A1 bekannt. Sie hat ein Microarray, das als Träger einen Papierstreifen aufweist, der in Form einer Rolle in einer Kassette angeordnet ist. Auf dem Papierstreifen sind mehrere, in Erstreckungsrichtung des Papierstreifens zueinander versetzte Bereiche mit Rezeptoren immobilisiert, die als Oligonukleotide ausgebildet sind. Das Microarray dient zum qualitativen und/oder quantitativen Nachweis des Vorhandenseins von bestimmten Liganden, wie z.B. Biomolekülen, in einer zu analysierenden Probe. Die Rezeptoren der einzelnen Bereiche unterscheiden sich jeweils in ihrer Spezifität gegenüber einem bestimmten, nachzuweisenden Liganden. Dadurch ist es möglich, die Probe mit Hilfe des Microarrays gleichzeitig auf das Vorhandensein mehrerer unterschiedlicher Liganden zu untersuchen.

Zur Detektion eines in der Probe enthaltenen Liganden wird diese mit Hilfe einer Untersuchungsvorrichtung mit den auf dem Microarray immobilisierten Rezeptoren in Kontakt gebracht. Die Untersuchungsvorrichtung weist dazu eine Probenauftragungseinrichtung auf, an der das Microarray zum Auftragen der Probe vorbeibewegt wird. Wenn in der Probe ein Ligand enthalten ist, für den ein aufdem Träger des Microarrays immobilisierter Rezeptor spezifisch ist, bindet der Ligand an den Rezeptor. Der dadurch entstandene Rezeptor-Liganden-Komplex wird mit Hilfe einer Anregungsstrahlung zur Abgabe von Lumineszenzstrohlung angeregt. Zur Detektion der Lumineszenzstrahlung wird das Microarray an einem Strohlungsempfönger vorbeibewegt, der in Bewegungsrichtung des Microarrays hinter der Auftragungseinrichtung angeordnet ist. Die Vorrichtung hat den Nachteil, dass der Strahlungsempfänger relativ weit von den Rezeptoren beabstandet sind. Die Vorrichtung ermöglicht deshalb nur eine geringe Ortsauflösung der Detektion eines auf dem Microarray befindlichen Rezeptor-Liganden-Komplexes.

Aus US 6 197 503 B1 ist ferner eine miniaturisierte Vorrichtung zum Nachweis von Rezeptor-Liganden-Komplexen mit Hilfe von Lumineszenzstrohlung bekannt Die Vorrichtung weist einen Behälter mit einem Aufnahmeraum für eine Probe auf Der Behälter hat ein etwa quaderförmiges Behälterteil, das in Gebrauchsstellung mit seiner Unterseite flächig auf einem Microarray aufliegt. An der Unterseite des Behälterteils sind mehrere, dem Microarray zugewandte Analysenöffnungen angeordnet; an denen die in dem Aufnahmeraum befindlichen Probe mit den auf dem Träger des Microarrays immobilisierten Rezeptoren in Kontakt gerät. Dabei bindet der Ligand an den für den Liganden spezifischen Rezeptor und bildet mit diesem einen Rezeptor-Liganden-Komplex Zum Nachweis des Rezeptor-Liganden-Komplexes wird dieser mit einem Lumineszenzstoff markiert, der mit Hilfe einer optischen Strahlungsquelle zur Emission von Lumineszenzstrahlung angeregt wird. Der Träger des Microarrays ist für die Lumineszenzstrahlung durchlässig. Unterhalb des Trägers ist eine für die Lumineszenzstrahlung durchlässige optische Filterscheibe angeordnet, auf welcher der Träger flächig aufliegt Zur Detektion der Lumineszenzstrahlung sind an der dem Microarray abgewandten Rückseite der Filterscheibe matrixförmig eine Vielzahl von Strahlungsemprongem angeordnet, die in einen Mikrochip integriert sind. Durch die Filterscheibe ist der Mikrochip gegen die Probe, für die das Microarray durchlässig ist, abgedichtet. Auch diese Vorrichtung hat den Nachteil, dass die Strahlungsempfringer relativ weit von den Rezeptoren beabstandet sind. Die Vorrichtung ermöglicht deshalb nur eine geringe Ortsauflösung der Detektion eines auf dem Microarray befindlichen Rezeptor-Liganden-Komplexes. Ungünstig ist außerdem, dass die Vorrichtung einen relativ komplizierten Aufbau aufweist

Es besteht deshalb die Aufgabe, eine Vorrichtung zur Detektion mindestens eines in einer zu untersuchenden Probe enthaltenen Liganden zu schaffen, die einen einfachen Aufbau aufweist, kostengünstig herstellbar ist, aber dennoch auf dem Microarray eine hohe Ortsauflösung der Detektion ermöglicht

Diese Aufgabe wird mit den Merkmalen des Anspruchs 1 gelöst.

In vorteilhafter Weise dient der Träger außer zur Aufnahme der Rezeptoren auch zum Abdichten des von dem Behälterteil umgrenzten Proben-Aufhahmeraums gegen den Mikrochip, so dass eine zusätzliche Dichtung eingespart werden kann. Die Vorrichtung lässt sich dadurch kostengünstig herstellen. Da der Träger als Folie ausgebildet ist, kann er eine entsprechend geringe Wandstärke aufweisen, so dass der in den Mikrochip integrierte Strahlungsempfänger praktisch direkt an den auf dem Träger immobilisierten Rezeptoren positioniert sein kann. Die Vorrichtung ermöglicht dadurch bei der Detektion der von einem auf dem Träger befindlichen Rezeptor-Liganden-Komplex und/oder einem daran gebundenen Lumineszenzstoff ausgesandten Lumineszenzstrahlung eine hohe Ortsauflösung und eine große Detektionsempflndlichkeit Rezeptorbereiche mit unterschiedlichen Rezeptoren können dicht nebeneinander angeordnet sein und dennoch kann eine hohe Übersprechdämpfung zwischen den aus den einzelnen Rezeptorbereichen und den diesen jeweils zugeordneten Strahlungsempfängern bestehenden Messanordnungen erreicht werden. Die Vorrichtung kann also kleine Abmessungen aufweisen, so dass nur eine entsprechend geringe Probenmenge für die Durchführung der Messung benötigt wird. Der Behälter kann als Durchflussmesskammer mit wenigstens einer Einlassöffnung und mindestens einer Auslassöffnung ausgebildet sein. In dem Behälter kann gegebenenfalls ein Überdruck herrschen, durch den die Polymerfolie an den Mikrochip angedrückt wird.

Bei einer vorteilhaften Ausführungsform der Erfindung ist auf der Polymerfolie als Beschichtung eine Mikrofasermembran angeordnet, auf welche die Rezeptoren aufgebracht sind. Dadurch kann eine besonders große Anzahl Rezeptoren auf dem Träger immobilisiert werden, was beim Nachweisen eines in der Probe enthaltenen Liganden eine noch größere Messempflndlichkeit ermöglicht

Vorteilhaft ist, wenn die Polymerfolie durch eine Bondverbindung mit dem Mikrochip verbunden ist. Die Rezeptoren können dann bei der Herstellung der Vorrichtung mit großer Genauigkeit an den Strahlungsempfängern des Mikrochips positioniert und in dieser Lage fixiert werden. Es ist aber auch denkbar, dass die Polymerfolie durch eine Klebstoffschicht auf dem Mikrochip fixiert ist.

Bei einer besonders vorteilhaften Ausführungsform der Erfindung ist die Polymerfolie als Polymerband ausgebildet, an dessen Oberfläche eine Vielzahl von Rezeptoren in Erstreckungsrichtung des Polymerbands versetzt zueinander angeordnet sind, wobei ein Magazin zur Aufnahme eines Vorrats des bandförmigen Microarrays vorgesehen ist, wobei das Microarray über eine Führungseinrichtung von dem Magazin zu dem wenigstens einen Strahlungsempfänger geführt ist, und wobei zum Positionieren der Rezeptoren an dem Strahlungsempfänger eine Transporteinrichtung für das Microarray vorgesehen ist. Auf der Polymerfolie können dann eine Vielzahl unterschiedlicher Rezeptoren, wie z.B. Antigene, angeordnet sein, die nacheinander an dem wenigstens einen Strahlungsempfänger positioniert werden können. Somit kann die Probe auf einfache Weise auf das Vorhandensein einer Vielzahl unterschiedlicher Liganden untersucht werden. Die Probe kann beispielsweise eine aufgereinigte Blutprobe sein, die mit Hilfe der Vorrichtung auf Bestandteile von Pollen untersucht wird, die eine Allergie auszulösen können.

Bei einer zweckmäßigen Ausgestaltung der Erfindung ist das Microarray zu einer Rolle aufgewickelt, die drehbar an dem Magazin angeordnet ist. Dadurch kann eine noch größere Menge des bandförmigen Microarray auf kompaktem Raum angeordnet sein.

Bei einer zweckmäßigen Ausgestaltung der Erfindung weist die Vorrichtung eine Aufwickeleinrichtung für das Microarray auf, wobei das Microarray von dem Magazin über den Strahlungsempfänger zu der Aufwickeleinrichtung verläuft. Das Microarray kann dann gegebenenfalls nach Durchführung einer Messung mit Hilfe einer Spülflüssigkeit gespült und auf der Aufwickeleinrichtung zu einer Rolle aufgerollt werden. Das Mikroarray kann dadurch mehrfach verwendet werden.

Vorteilhaft ist, wenn der Träger maschinenlesbare Markierungen aufweist, die in einer vorbestimmten Lage relativ zu den Rezeptoren angeordnet sind, und wenn eine Leseinrichtung für die Markierungen vorgesehen ist. Die Leseinrichtung kann dann über einen Lageregler und/oder eine Lagesteuereinrichtung mit der Transporteinrichtung verbunden sein, um die einzelnen Rezeptoren oder Rezeptorbereiche nacheinander jeweils in einer vorbestimmten Lage an dem wenigstens einen Strahlungsempfänger zu positionieren.

Bei einer zweckmäßigen Ausgestaltung der Erfindung weisen die Markierungen eine Codierung zum Identifizieren der Art des ihnen jeweils zugeordneten Rezeptors und/oder der ihnen jeweils zugeordneten Rezeptoren auf, wobei die Leseinrichtung zum Lesen dieser Codierung ausgebildet ist. Die Leseinrichtung kann dann mit einer Einrichtung zur Anzeige, Verarbeitung und/oder Auswertung des Messsignals des wenigstens einen Strahlungsempfängers verbunden sein, um die in der Markierung gespeicherten Informationen über die Rezeptoren bei der Aufbereitung, Auswertung und/oder Anzeige des Messsignals zu berücksichtigen. Gegebenenfalls kann das Messsignal zusammen mit den in der Markierung oder den Markierungen abgelegten Informationen in Form eines Datensatzes auf einem Datenträger gespeichert werden.

Vorteilhaft ist, wenn das Microarray eine Perforierung aufweist, in die in Gebrauchsstellung ein Übertragungselement der Transporteinrichtung eingreift. Die auf der Polymerfolie direkt oder indirekt über eine Zwischenschicht immobilisierten Rezeptoren können dadurch noch genauer an dem wenigstens einen Strahlungsempfänger positioniert werden. Dabei ist es sogar möglich, dass die Transporteinrichtung eine Traktorführung aufweist die in die Perforierung der Polymerfolie eingreift.

Nachfolgend sind Ausführungsbeispiele der Erfindung anhand der Zeichnung näher erläutert Es zeigen zum Teil stärker schematisiert:
- Fig. 1: eine Seitenansicht einer Vorrichtung zum Immobilisieren von Rezeptoren auf einem bandförmigen Träger,
- Fig. 2: einen Querschnitt durch eine Vorrichtung zur Detektion von in einer zu untersuchenden Probe enthaltenen Liganden, mit einem auf einem Halbleiterchip ortsfest angeordneten biologischen Microarray,
- Fig. 3: einen Querschnitt durch eine Vorrichtung zur Detektion von in einer zu untersuchenden Probe enthaltenen Liganden, wobei das Microarray bandförmig ausgebildet und durch Umspulen zwischen zwei Spulen re- lativ zu einem Halbleiterchip bewegbar ist,
- Fig. 4: eine Aufsicht auf einen an dem Halbleiterchip positionierten Abschnitt eines bandförmigen Microarrays,
- Fig. 5: einen Querschnitt durch eine Durchflussmesskammer, und
- Fig.6: einen Teilquerschnitt durch den Halbleiterchip und das Microarray, wobei auf dem Träger des Microarrays ein Rezeptor-Liganden-Komplex immobilisiert ist, an den ein Lumineszenzstoff gebunden ist.

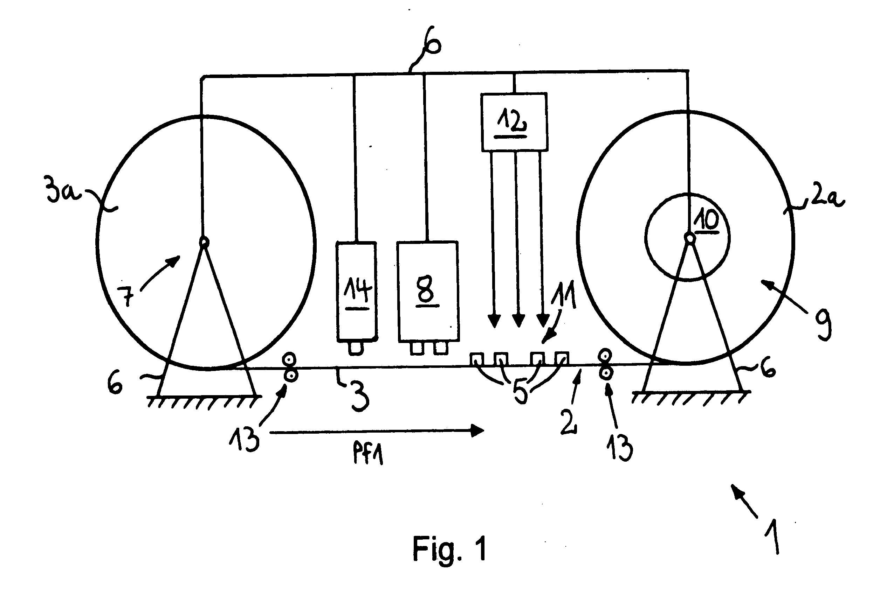

Eine in Fig. 1 im Ganzen mit 1 bezeichnete Vorrichtung zum Herstellen eines biologischen Microarrays 2, bestehend aus einem bandförmigen Träger 3 mit darauf immobilisierten, jeweils für einen bestimmten Liganden 4 spezifischen Rezeptoren 5, weist eine in der Zeichnung nur schematisch dargestellte Halterung 6 auf, an der ein erstes Magazin mit einer Aufnahme 7 für den bandförmigen, zu einer Rolle 3a gewickelten Träger 3 angeordnet ist. An der Aufnahme 7 ist die Rolle 3a um ihre Achse drehbar gelagert. Der Träger 3 ist als feuchtigkeitsdichte, optisch transparente Polymerfolie ausgebildet.

An der Halterung 6 ist ferner eine Auttragungseinrichtung 8 angeordnet, mit deren Hilfe die Rezeptoren 5 auf den Träger 3 aufgetragen werden können. Der bandförmige Träger 3 verläuft von der Rolle 3a zu der Auftragungseinrichtung 8 und von dieser zu einem zweiten Magazin, das eine Aufwickeleinrichtung 9 aufweist Die Aufwickeleinrichtung 9 hat einen Spulenkörper 10, der um seine Achse drehbar an der Halterung 6 angeordnet ist. Auf dem Spulenkörper 10 ist der mit den Rezeptoren 5 beschichtete Träger 3, der das Microarray 2 bildet, zu einer Rolle 2a aufwickelbar.

Zwischen der Auftragungseinrichtung 8 und der Aufwickeleinrichtung 9 ist eine Bestrahlungsstelle 11 vorgesehen, an der die auf den Träger 3 aufgebrachten Rezeptoren 5 mit Hilfe einer Lichtquelle 12 mit UV-Licht bestrahlt und dadurch auf dem Träger 3 immobilisiert werden können. Zur Führung des Trägers 3 von der Rolle 3a zu der Aufwickeleinrichtung 9 ist eine Bandführungseinrichtung 13 vorgesehen, die Führungsrollen aufweist, zwischen denen der bandförmige Träger hindurchgeführt ist.

Zum Transport des Trägers 3 von der an der Aufnahme 7 angeordneten Rolle 3a in Richtung des Pfeils Pf1 über die Auftragungseinrichtung 8 und die Bestrahlungsstelle 10 zu der Aufwickeleinrichtung 9 ist eine Transporteinrichtung vorgesehen, die in Zeichnung nicht näher dargestellt ist. Die Transporteinrichtung kann einen Servomotor als Antrieb aufweisen, der mit dem Spulenkörper 10 und/oder der Bandführungseinrichtung 1 3 in Antriebsverbindung steht.

Die Auftragungseinrichtung 8 weist mehrere Vorratsbehälter für unterschiedliche Arten von Rezeptoren 5 auf In den Vorratsbehältern sind die Rezeptoren 5 in flüssiger Form oder einem flüssigen Medium angeordnet. Die Rezeptoren können für unterschiedliche Liganden 4 spezifisch sein und/oder eine unterschiedliche Affinität zu einem bestimmten Liganden 4 aufweisen. Die einzelnen Vorratsbehälter für die Rezeptoren 5 sind jeweils mit einer Abgabeeinrichtung verbunden, die eine Austrittsötfnung für die Rezeptoren 5 aufweist. An den Austrittsötfnungsöffnungen können die Rezeptoren kontinuierlich oder diskontinuierlich abgegeben werden. Es ist aber auch möglich, dass mehrere Vorratsbehälter über Absperrventile mit einer gemeinsamen Austrittsöffnung verbunden sind. Die Austrittsötfnungen sind einer zu beschichtenden Flachseite des Trägers 3 zugewandt. Dabei sind die Austrittsöffnungen etwas von dem Träger 3 beabstandet. Die Abgabe der Rezeptoren 5 an den Austrittsöffnungen erfolgt vorzugsweise unter Druck in Form eines Sprühstrahls.

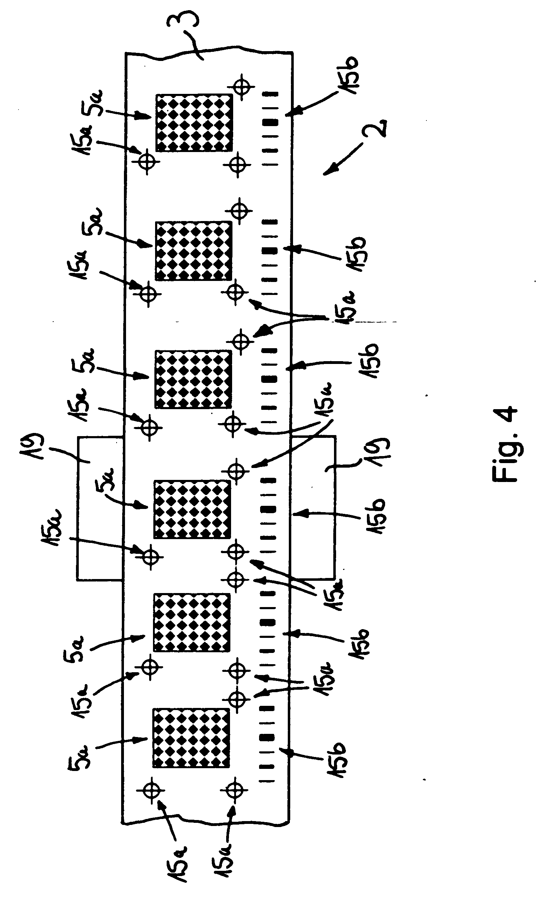

In Fig. 4 ist erkennbar, dass auf den Träger 3 eine Vielzahl von Rezeptorfeldern 5a aufgebracht werden, die in konstanten Abständen in Erstreckungsrichtung des Trägers 3 voneinander beabstandet sind. Die Rezeptorfelder 5a weisen eine etwa rechteckige Außenkontur auf Zwei einander gegenüberliegende Randbereiche der einzelnen Rezeptorfelder 5a verlaufen jeweils etwa parallel zur Längserstreckung Pf2 des Trägers 3. Jedes Rezeptorfeld 5a weist mehrere Rezeptoren 5 bzw. Rezeptorbereiche auf, die matrixförmig in mehreren Reihen und Spalten angeordnet sind.

An der Halterung 6 ist eine Markiereinrichtung 14 zum Anbringen von maschinenlesbaren Markierungen 15a, 15b an dem Träger 3 angeordnet. Die Markierungen 15a sind als Positionierhilfen ausgebildet und weisen ein Fadenkreuz auf, mit dessen Hilfe der Träger 3 mit den darauf befindlichen Rezeptorbereichen in einer vorbestimmten Lage beispielsweise an einem optischen Sensor positionierbar ist. Die Markierungen 15a sind als Strichcodes ausgebildet, in dem Informationen über die dazu jeweils benachbarten Rezeptorfelder 5a, insbesondere über die Art der Rezeptoren 5, gespeichert sind.

Es ist aber auch denkbar, dass der Träger 3 bereits fertig vormarkiert ist, die Markierungen also bereits auf den auf der Rolle 3a befindlichen Träger 3 aufgedruckt oder anderweitig angebracht sind. In diesem Fall kann die Vorrichtung 1 anstelle der Markiereinrichtung 14 eine Leseeinrichtung zum Detektieren der Markierungen 15a und/oder 15b aufweisen. Die Leseeinrichtung ist zum Positionieren des Trägers 3 an der Auftragungseinrichtung 8 in einer durch die Markierungen vorbestimmten Lage mit der Transporteinrichtung und/oder zum Auftragen des dem Strichcode entsprechenden Rezeptormaterials mit der Auftragungseinrichtung 8 verbunden. Gegebenenfalls ist es sogar möglich, dass der Träger 3 in mehreren Durchläufen jeweils mit unterschiedlichen Rezeptoren 5 beschichtet wird. Dies kann zum Beispiel in der Weise erfolgen, dass die Vorratsbehälter der Auftragungseinrichtung 8 für einen ersten Durchlauf mit einer Anzahl erster Rezeptoren befüllt werden, dass der Träger 3 danach mit diesen Rezeptoren bereichsweise beschichtet wird, wobei der Träger von der Rolle 3a über die Auftragungseinrichtung 8 zu der Aufwickeleinrichtung 9 transportiert wird, dass der beschichtete Träger 3 danach von der Aufwickeleinrichtung 9 auf die Rolle 3a zurückgespult wird, dass für einen zweiten Durchlauf die Vorratsbehälter der Auftragungseinrichtung 8 mit einer Anzahl zweiter Rezeptoren befüllt werden, und dass der Träger 3 danach mit diesen Rezeptoren 5 bereichsweise beschichtet wird, wobei die Rezeptoren 5 in dem zweiten Durchlauf an Stellen auf den Träger 3 aufgebracht werden, die bei dem ersten Durchlauf nicht mit Rezeptoren 5 beschichtet wurden. Gegebenenfalls können in entsprechender Weise weitere Durchläufe durchgeführt werden.

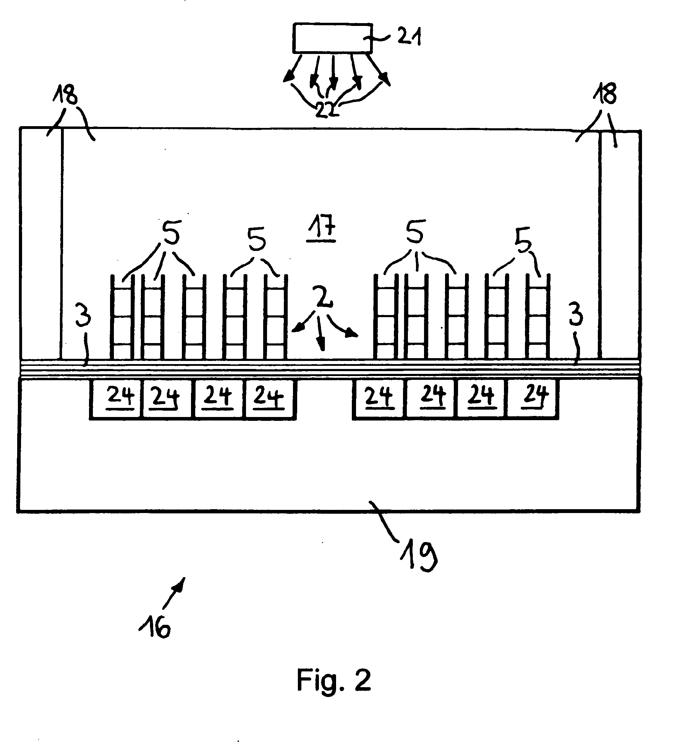

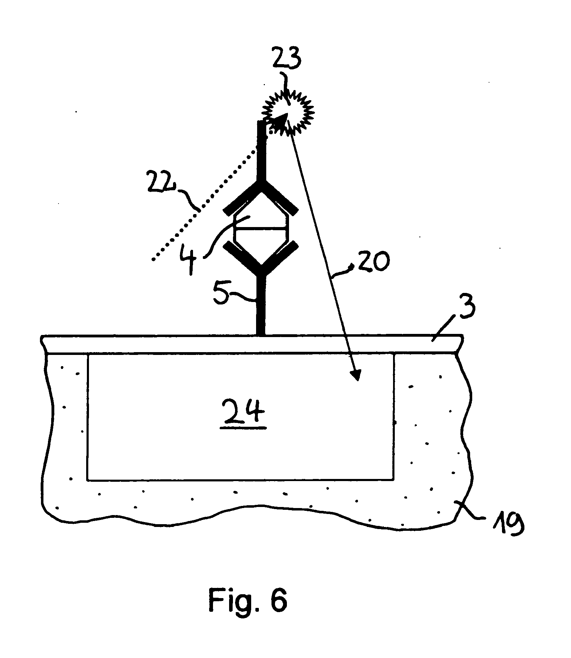

Eine in Fig. 2 gezeigte, im Ganzen mit 16 bezeichnete Vorrichtung zur Detektion mindestens eines in einer zu untersuchenden Probe enthaltenen Liganden 4 weist ein Behälterteil 18 auf, das einen Aufhahmeraum 17 für die Probe umgrenzt. Das Behälterteil 18 hat an seiner Unterseite eine Analysenöffnung, an der ein Microarray 2 angeordnet ist. Das Microarray 2 weist als Träger 3 eine feuchtigkeitsdichte Polymerfolie auf, auf der matrixförmig Rezeptorbereiche angeordnet sind, in denen Rezeptoren 5 auf der Polymerfolie immobilisiert sind. Die Rezeptoren 5 können jeweils mit einem speziellen Uganden eine spezifische Bindung eingehen. Die Rezeptoren 5 sind in den Fig. 2 und 6 vergrößert und schematisch dargestellt Die Polymerfolie ist an ihrem Umfangsrondbereich feuchtigkeitsdicht mit dem Behälterteil 18 verbunden. Dies kann beispielsweise dadurch erreicht werden, dass die Polymerfolie durch eine unterbrechungsfrei umlaufende Schweißnaht mit dem die Analysenöffnung umgrenzenden Rand Behälterteils 18 verschweißt ist.

Zur Anregung der Emission von Lumineszenzstrahlung 20 in Abhängigkeit von der Bindung des Liganden 4 an den Rezeptor 5 ist eine Strahlungsquelle 21 vorgesehen, die eine Anregungsstrahlung 22 in den Aufnahmeraum 17 abstrahlt. Die Strahlungsquelle 21 kann beispielsweise eine Leuchtdiode oder Laserdiode aufweisen.

Die Lumineszenzstrahlung 20 kann von einem auf dem Träger 3 immobilisierten Rezeptor-Liganden-Komplex (Chemolumineszenz) und/oder einem an den Rezeptor-Liganden-Komplex direkt oder indirekt gebundenen Lumineszenzstoff 23 ausgesandt werden, welcher den Rezeptor-Liganden-Komplex markiert.

An der dem Aufnahmeraum 17 abgewandten Rückseite der Polymerfolie ist ein Mikrochip 18 angeordnet, in den Strahlungsempfänger 24 zum Detektieren der Lumineszenzstrahlung integriert sind. Die Strahlungsempfänger 24 können beispielsweise als CCD- oder CMOS-Array ausgebildet sein. Der Mikrochip 18 ist durch die Polymerfolie bzw. den Träger 3 und das Behälterteil 18 gegen die in dem Aufnahmeraum 17 befindliche Probe abgedichtet.

Die Polymerfolie ist für die Lumineszenzstrahlung durchlässig und grenzt mit ihrer Rückseite direkt an den Mikrochip an. Dadurch kann die Lumineszenzstrahlung in unmittelbarer Nähe zum Abstrahlort und somit mit hoher Ortsauflösung detektiert werden.

Der Aufnahmeraum 17 kann auch durch wenigstens eine rinnenförmige Vertiefung gebildet sein, die beispielsweise durch einen Prägschritt in ein vorzugsweise plattenförmiges Behälterteil aus einem Polymerwerkstotf oder dergleichen Material eingebracht sein kann. Dabei verläuft die wenigstens eine Rinne parallel zur Erstreckungsebene der Polymerfolie und ist dieser derart zugewandt, dass die Rinnen zusammen mit der Polymerfolie Kapillaren umgrenzen, durch welche die Probe oder dergleichen Fluidum den Rezeptoren oder Rezeptorbereichen zugeführt werden kann. Dabei ist es sogar möglich, dass eine Kapillare mehrere der matrixförmig angeordneten Rezeptorbereiche miteinander verbindet. Gegebenenfalls kann das Behälterteil mehrere dieser Kapillaren aufweisen. Dadurch ist es insbesondere möglich, die Kapillaren mit einem oder mehreren Standardanalyten bekannter Konzentration zu befüllen, um die Vorrichtung zu kalibrieren.

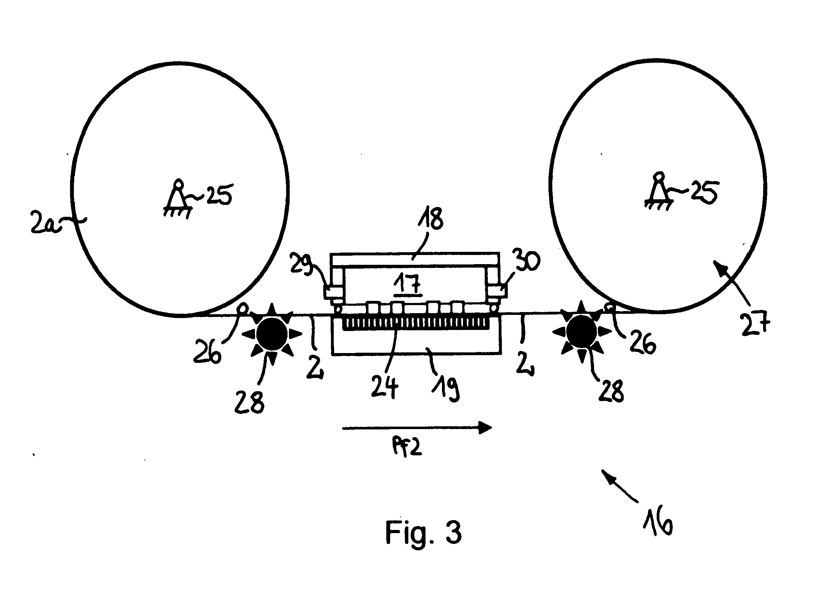

Bei der in Fig. 3 bis 5 gezeigten Vorrichtung 16 zur Detektion von in einer zu untersuchenden Probe enthaltenen Liganden ist das Microarray 2 bandförmig ausgebildet und auf einer Rolle. 2a magaziniert. Es hat ein Polymerband als Träger 3, an dessen Oberfläche eine Vielzahl von Rezeptorfeldern 5a aufgebracht sind, die in der durch den Pfeil Pt2 markierten Erstreckungsrichtung des Trägers 3 voneinander beabstandet sind. Die Rezeptorfelder 5a weisen jeweils mehrere Rezeptoren 5 bzw. Rezeptorbereiche auf, die matrixförmig angeordnet sind.

Die Rolle 2a ist drehbar an einer Halterung 25 angeordnet. Mit Hilfe einer Führungseinrichtung 26 ist das Microarray 2 von der Rolle 2a zu in einen Mikrochip 19 integrierten Strahlungsempfängern 24 und von diesen zu einer Aufwickeleinrichtung 27 geführt. Zum Positionieren der auf der Rolle 3a befindlichen Rezeptoren 5 an den Strahlungsempfängern 24 ist eine Transporteinrichtung vorgesehen, die mit einem Antrieb verbundene Übertragungselemente 28 aufweist, die in eine Perforierung des Microarrays 2 eingreifen. In Fig. 3 ist erkennbar, dass der Mikrochip 19 zwischen den Übertragungselementen 28 angeordnet ist, so dass das Microarray 2 an den Strahlungsempfängern 24 des Mikrochips exakt positioniert ist.

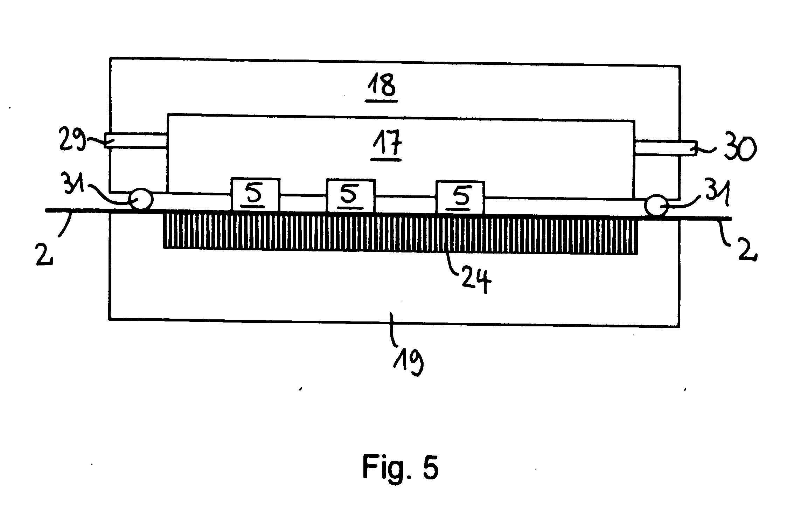

Wie in Fig. 5 besonders gut erkennbar ist, bildet das Behälterteil 15 mit dem Microarray 2 eine Durchflussmesskammer, die an dem Behälterteil 15 eine Einlassöffnung 29 und eine Auslassöffnung 30 aufweist. Das Microarray 2 bildet eine Wandung der Durchflussmesskammer, welche den Aufnahmeraum 17 für die Probe zu dem Mikrochip 19 hin abdichtet Zwischen dem Behälterteil 15 und dem Microarray 2 ist eine Dichtung 31 angeordnet, die bei dem Ausführungsbeispiel nach Fig. 5 als Dichtring ausgebildet ist. Wie bei dem Ausführungsbeispiel nach Fig. 2 grenzt das Microarray 2 mit seiner dem Aufnahmeraum 17 abgewandten Rückseite direkt an den Mikrochip an. Dabei verläuft das Microarray 2 etwa parallel zur Erstreckungsebene des Mikrochips 19.

In dem von der Durchflussmesskammer umgrenzten Aufnahmeraum 17 kann ein Überdruck herrschen, durch den das Microarray 2 an den Mikrochip 19 angedrückt wird. Da das Microarray 2 nur eine geringe Wandstärke aufweist, sind die Strahlungsempfänger 24 dicht an den Rezeptoren angeordnet Dadurch wird eine Detektion eines Liganden mit hoher Ortsauflösung ermöglicht.

Das Microarray 2 weist Markierungen 15a auf, mit deren Hilfe es in einer vorbestimmten Lage an dem Mikrochip 19 positionierbar ist. In den Mikrochip 19 Sensoren zum Detektieren der Markierungen 15a integriert, die mit der Transporteinrichtung in Steuerverbindung stehen. Außerdem weist das Microarray 2 Markierungen 15b auf, welche die Art des zu der Markierung 15b jeweils benachbarten Rezeptorfelds 5a codieren. In den Mikrochip 19 ist ein Sensor zum Lesen der Markierungen 15b integriert. Der Sensor ist mit einer Auswerteeinrichtung zur Verarbeitung der Codierung verbunden.

Mit der Vorrichtung 16 lassen sich auf einfache Weise eine Vielzahl von Rezeptorfeldern 5a an dem Aufnahmeraum 17 positionieren. Die Vorrichtung 16 ermöglicht deshalb eine automatisierte Durchführung einer großen Anzahl von Messungen.

Die Vorrichtung 1 zum Herstellen eines biologischen Microarrays 2, das zumindest einen bandförmigen, zu einer Rolle 3a gewickelten Träger 3 mit darauf immobilisierten Rezeptoren 5 aufweist, die jeweils mit einem bestimmten Liganden 4 eine spezifische Bindung eingehen können, hat also eine Halterung 6 mit einer Aufnahme 7, an der die Rolle 3a drehbar anbringbar ist. An der Halterung 6 ist eine Auftragungseinrichtung 8 zum Aufbringen der Rezeptoren 5 auf den Träger 3 angeordnet. Der Träger 3 ist mittels einer Bandführungseinrichtung 1 3 von der Aufnahme 7 über die Auftragungseinrichtung 8 zu einer Aufwickeleinrichtung 9 führbar. Der Träger 3 ist als feuchtigkeitsdichte Polymerfolie ausgebildet. Das Microarray 2 kann einen Aufnahmeraum 17 für eine zu untersuchende Probe gegen einen Sensoren zum Detektieren eines Rezeptor-Liganden-Komplexes aufweisenden Halbleiter-Mikrochip 19 abdichten.

## Patentansprüche

1. Vorrichtung (16) zur Detektion mindestens eines in einer zu untersuchenden Probe enthaltenen Liganden (4), mit einem Behälter, der einen Aufnahmeraum (17) für die Probe aufweist, wobei der Behälter ein Behälterteil (18) mit einer Analysenöffnung aufweist, an der ein Microarray (2) angeordnet ist, das einen Träger (3) aufweist auf dem wenigstens ein Rezeptor (5) immobilisiert Ist, der mit einem Liganden (4) eine spezifische Bindung eingehen kann, mit einem an der dem Aufnahmeraum (17) abgewandten Rückseite des Trägers (3) angeordneten Mikrochip (19), der wenigstens einen Strahlungsempfänger (24) zum Detektieren einer in Abhängigkeit von der Bindung des Liganden (4) an den Rezeptor (5) erzeugten Lumineszenzstrahlung (20) aufweist, wobei der Träger (3) für die Lumineszenzstrahlung (20) durchlässig ausgebildet ist, **dadurch gekennzeichnet, dass** der Träger (3) als huchtigkeltsdichte Polymerfolie ausgebildet ist, die derart mit dem Behälterteil (18) verbunden ist, dass sie die Analysenöffnung abdichtet, und dass die Polymerfolie mit ihrer Rückseite direkt an den Mikrochip (19) angrenzt.

2. Vorrichtung (16) nach Anspruch 1, **dadurch gekennzeichnet, dass** die Vorrichtung (16) zur Anregung der Emission der Lumineszenzstrahlung (20) mindestens eine optische Strahlungsquelle (21) aufweist.

3. Vorrichtung (16) nach Anspruch 1 oder 2, **dadurch gekennzeichnet, dass** auf der Polymerfolie als Beschichtung eine Mikrofasermembran angeordnet ist, und dass die Rezeptoren (5) auf die Mikrofasermembran aufgebracht sind.

4. Vorrichtung (16) nach einem der Ansprüche 1 bis 3, **dadurch gekennzeichnet, dass** die Polymerfolie durch eine Bondverbindung mit dem Mikrochip (19) verbunden ist.

5. Vorrichtung (16) nach einem der Ansprüche 1 bis 4, **dadurch gekennzeichnet, dass** die Polymerfolie als Polymerband ausgebildet ist, an dessen Oberfläche eine Vielzahl von Rezeptoren (5) in Erstreckungsrichtung des Polymerbands versetzt zueinander angeordnet sind, dass ein Magazin zur Aufnahme eines Vorrats des bandförmigen Microarrays (2) vorgesehen ist dass das Microarray (2) über eine Führungseinrichtung (26) von dem Magazin zu dem wenigstens einen Strahlungsempfünger (24) geführt ist und dass zum Positionieren der Rezeptoren (5) an dem Strahlungsempfänger (24) eine Transporteinrichtung für das Microarray (2) vorgesehen ist.

6. Vorrichtung (16) nach einem der Ansprüche 1 bis 5, **dadurch gekennzeichnet, dass** das Microarray (2) zu einer Rolle (2a) aufgewickelt ist, die drehbar an dem Magazin angeordnet ist.

7. Vorrichtung (16) nach einem der Ansprüche 1 bis 6, **dadurch gekennzeichnet, dass** sie eine Aufwickeleinrichtung (27) für das Microarray (3) aufweist, und dass das Microarray (3) von dem Magazin über den Strahlungsempfänger (24) zu der Aufwickeleinrichtung (27) verläuft.

8. Vorrichtung (16) nach einem der Ansprüche 1 bis 7, **dadurch gekennzeichnet dass** der Träger (3) des Microarrays (2) maschinenlesbare Markierungen (15a, 15b) hat, die zumindest Bereiche aufweisen, die in einer vorbestimmten Lage relativ zu den Rezeptoren (5) angeordnet sind, und dass eine Leseinrichtung für die Markierungen vorgesehen ist.

9. Vorrichtung (16) nach einem der Ansprüche 1 bis 8, **dadurch gekennzeichnet, dass** die Markierungen (15a, 15b) eine Codierung zum Identifizieren der Art des Ihnen jeweils zugeordneten Rezeptors (5) und/oder der ihnen jeweils zugeordneten Rezeptoren (5) aufweist und dass die Leseinrichtung zum Lesen dieser Codierung ausgebildet ist.

10. Vorrichtung nach einem der Ansprüche 1 bis 9, **dadurch gekennzeichnet, dass** das Microarray (2) eine Perforierung aufweist, in die in Gebrauchsstellung ein Übertragungselement (27) der Transporteinrichtung eingreift.

## Claims

1. Unit (16) for detecting at least one ligand (4) in a sample to be analyzed, with a container which has a compartment (17) for the sample, wherein the container has a container section (18) with an analysis opening on which a microarray (2) is arranged, said microarray having a support (3) on which at least one receptor (5) is immobilized, which can form a specific bond with a ligand (4), with a microchip (19) arranged on the back of the support (3) facing away from the compartment (17), said microchip having at least one radiation detector (24) to detect a luminescence radiation (20) produced at the receptor (5) depending on the ligand (4) bond, wherein the support (3) is designed to let the luminescence radiation (20) penetrate, **characterized in that** the support (3) is designed as a moisture-proof polymer foil, which is connected to the container section (18) in such a way that it seals the analysis opening and that the back of the polymer foil directly adjoins the microchip (19).

2. Unit (16) as claimed in Claim 1, **characterized in that** the unit (16) has at least one optical radiation source (21) to stimulate the emission of the luminescence radiation (20).

3. Unit (16) as claimed in Claim 1 or 2, **characterized in that** a microfiber membrane is arranged on the polymer foil as a coating, and that the receptors (5) are provided on the microfiber membrane.

4. Unit (16) as claimed in one of the Claims 1-3, **characterized in that** the polymer foil is connected to the microchip (19) by a bond.

5. Unit (16) as claimed in one of the Claims 1-4, **characterized in that** the polymer foil is designed as a polymer belt on the surface of which a large number of receptors (5) are arranged in an offset pattern in the direction of elongation of the polymer belt, **in that** a reservoir is provided to hold a supply of the belt-shaped microarray (2), **in that** the microarray (2) is guided via a routing mechanism (26) from the reservoir to the one radiation detector (24) at least, and **in that** a transport unit is provided for the microarray (2) to position the receptors (5) on the radiation detector (24).

6. Unit (16) as claimed in one of the Claims 1-5, **characterized in that** the microarray (2) is wound into a roll (2a) which is mounted to allow rotation on the reservoir.

7. Unit (16) as claimed in one of the Claims 1-6, **characterized in that** it has a windup mechanism (27) for the microarray (3) and **in that** the microarray (3) extends from the reservoir to the windup mechanism (27) via the radiation detector (24).

8. Unit (16) as claimed in one of the Claims 1-7, **characterized in that** the support (3) of the microarray (2) has machine-readable marks (15a, 15b) that at least have areas that are arranged at a predefined position relative to the receptors (5), and **in that** a reader is provided for the marks.

9. Unit (16) as claimed in one of the Claims 1-8, **characterized in that** the marks (15a, 15b) have a code to identify the type of receptor (5) and/or receptors (5) specifically assigned to them, and that the reader is designed to read this code.

10. Unit as claimed in one of the Claims 1-9, **characterized in that** the microarray (2) has a perforation in which a transmission element (27) of the transport unit engages in the position of use.

## Revendications

1. Dispositif (16) destiné à la détection d'au moins un des ligands (4) contenus dans un échantillon à analyser, avec un récipient présentant un espace de logement (17) pour l'échantillon, auquel cas le récipient présente une partie (18) avec une ouverture d'analyse au niveau de laquelle est disposée une puce à ADN (2), pourvue d'un support (3) sur lequel est immobilisé au moins un récepteur (5) qui peut former une liaison spécifique avec un ligand (4), avec une micro-puce (19) disposée sur la face arrière du support (3) du côté opposé de l'espace de logement (17), présentant au moins un radiorécepteur (24) pour la détection d'un rayonnement de luminescence (20) en fonction de la liaison du ligand (4) au niveau du récepteur (5), auquel cas le support (3) est conçu de façon translucide au rayonnement de luminescence (20), **caractérisé en ce que** le support (3), formé d'une feuille de polymère étanche à l'humidité, est lié avec la partie du récipient (18) de sorte à étanchéifier l'ouverture d'analyse, et que la face arrière de la feuille de polymère soit contiguë avec la micro-puce (19).

2. Dispositif (16) selon la revendication 1, **caractérisé en ce que** le dispositif (16) présente au moins une source de rayonnement optique (21) pour l'excitation de l'émission du rayonnement de luminescence (20).

3. Dispositif (16) selon la revendication 1 ou 2, **caractérisé en ce qu'**une membrane en microfibres est disposée en tant que revêtement sur la feuille de polymère, et que les récepteurs (5) sont fixés sur la membrane en microfibres.

4. Dispositif (16) selon l'une des revendications 1 à 3, **caractérisé en ce que** la feuille de polymère est assemblée par adhérence avec la micro-puce (19).

5. Dispositif (16) selon l'une des revendications 1 à 4, **caractérisé en ce que** la feuille de polymère est constituée d'une bande polymère, à la surface de laquelle sont disposés plusieurs récepteurs (5) de façon décalée les uns par rapport aux autres, dans le sens d'étirement de la bande polymère, qu'un magasin est prévu pour le logement d'une réserve de puce à ADN (2) sous forme de bande, que la puce à ADN (2) est acheminée via un dispositif de guidage (26) du magasin vers au moins un radiorécepteur (24), et qu'un dispositif de transport est prévu pour la puce à ADN (2) à des fins de positionnement des récepteurs (5) au niveau du radiorécepteur (24).

6. Dispositif (16) selon l'une des revendications 1 à 5, **caractérisé en ce que** la puce à ADN (2) est enroulée sous forme de bobine (2a), disposée sur le magasin de façon libre en rotation.

7. Dispositif (16) selon l'une des revendications 1 à 6, **caractérisé en ce qu'**il présente un dispositif d'enroulement (27) pour la puce à ADN (3), et que la puce à ADN (3) est transportée du magasin jusqu'au dispositif d'enroulement (27) via le radiorécepteur (24).

8. Dispositif (16) selon l'une des revendications 1 à 7, **caractérisé en ce que** le support (3) de la puce à ADN (2) est pourvu de marques (15a, 15b) lisibles par machine, présentant au moins des zones qui sont disposées dans une position prédéfinie par rapport aux récepteurs (5), et qu'un dispositif de lecture des marques est prévu.

9. Dispositif (16) selon l'une des revendications 1 à 8, **caractérisé en ce que** les marques (15a, 15b) présentent un codage pour l'identification du type de récepteur (5) qui leur est respectivement affecté, et/ou des récepteurs (5) qui leurs sont respectivement affectés, et que le dispositif de lecture soit approprié pour la lecture de ce codage.

10. Dispositif (16) selon l'une des revendications 1 à 9, **caractérisé en ce que** la puce à ADN (2) présente une perforation dans laquelle un élément de transmission (27) du dispositif de transport s'engage en position d'utilisation.
